Europäisches Patentamt

European Patent Office

Office européen des brevets

(19)

(11) Veröffentlichungsnummer: **0 059 207**
**B1**

(12) **EUROPÄISCHE PATENTSCHRIFT**

(45) Veröffentlichungstag der Patentschrift:
**19.06.85**

(21) Anmeldenummer: **81902485.2**

(22) Anmeldetag: **24.08.81**

(86) Internationale Anmeldenummer:
**PCT/EP 81/00131**

(87) Internationale Veröffentlichungsnummer:
**WO 82/00837 (18.03.82 Gazette 82/8)**

(51) Int. Cl.⁴: **D 06 N 5/00, D 06 M 17/00,
B 23 B 5/12, D 21 H 1/08**

(54) **VLIESLEGE-NASSVERFAHREN UND DAMIT HERSTELLBARE MEHRSCHICHTIGE EINLAGEBAHN FÜR DACHPAPPEN.**

(30) Priorität: **08.09.80 DE 8023893 U**

(43) Veröffentlichungstag der Anmeldung:
**08.09.82 Patentblatt 82/36**

(45) Bekanntmachung des Hinweises auf die Patenterteilung:
**19.06.85 Patentblatt 85/25**

(84) Benannte Vertragsstaaten:
**AT CH DE FR GB LI NL SE**

(56) Entgegenhaltungen:
**CH - A - 178 451
DE - A - 483 735
FR - A - 1 234 509
FR - A - 2 219 002
FR - A - 2 305 301
FR - A - 2 348 308
GB - A - 1 041 796
GB - A - 1 331 817
US - A - 3 072 511**

**J. Lünenschloss u. W. Albrecht, "Vliesstoffe", 1982, G. Thieme Verlag, Stuttgart, New York, Seite 241**

Die Akte enthält technische Angaben, die nach dem Eingang der Anmeldung eingereicht wurden und die nicht in dieser Patentschrift enthalten sind.

(73) Patentinhaber: **GULLFIBER AB, Fack,
S-260 50 Billesholm (SE)**

(72) Erfinder: **BERGSTRÖM, Leif, Sanatorievägen 25,
S-833 00 Strömsund (SE)**

(74) Vertreter: **Raible, Hans, Dipl.-Ing., Lenbachstrasse 32,
D-7000 Stuttgart 1 (DE)**

**Beschreibung**

Die Erfindung betrifft ein Vlieslege-Naßverfahren zur Herstellung einer Einlagebahn für sogenannte Dachpappen. Sie betrifft ferner eine mit diesem Verfahren herstellbare mehrschichtige flexible Einlagebahn für sogenannte Dachpappen.

Auf der TAPPI 1973 Paper Synthetics Conference (22. bis 24. 10. 1973) wurde das Schemabild einer Naßvlieslegemaschine mit Doppelstoffauflauf gezeigt. Hierbei ist ein einziger Stoffauflauf durch ein Trennlippe in zwei Suspensionskammern unterteilt, so daß zunächst eine Unterschicht aus einem ersten Faserstoff (aus der ersten Suspensionskammer) und direkt anschließend, also auf demselben Hydroformer, eine Oberschicht aus einem anderen Faserstoff (aus der zweiten Suspensionskammer) erzeugt werden kann. Dabei ist die Möglichkeit gegeben, zwischen beiden Vliesschichten im gleichen Arbeitsgang ein Fadengelege oder Einzelfäden mit einlaufen zu lassen. Hierbei läßt sich jedoch nicht in allen Fällen eine zufriedenstellende Verbindung der 3 Schichten erreichen. Außerdem werden, wenn Glasfasern als Faserstoff verwendet werden, nach dieser Literaturstelle Glasfaserlängen benötigt, deren Größe zwischen 6,5 und 25 mm (0,25 bis 1 Zoll) liegt, d. h. man benötigt hierbei recht lange Fasern. Dies führt zu einer geringen Dehnbarkeit des Produkts. — Ein Auszug aus dieser Literaturstelle, nämlich ein Schrägsiebformer mit Doppelstoffauflauf zur Herstellung zweilagiger Bahnen, findet sich in dem Buch »Vliesstoffe«, herausgegeben von Lünenschloß und Albrecht, Georg Thieme-Verlag Stuttgart, 1982, Seite 241.

Die GB-A-1 396 188 zeigt die Herstellung eines Lederersatzstoffes aus zermahlenen Lederfasern auf einem solchen Schrägsiebformer mit einem Einzelstoffauflauf oder einem Doppelstoffauflauf. Bei der Anordnung mit Doppelstoffauflauf kann zwischen den beiden Stoffaufläufen eine zusätzliche gewebte oder nicht gewebte Bahn eingebracht werden, um das Endprodukt zu verstärken. Ein solches Produkt aus Lederfasern ist jedoch zur Herstellung sogenannter Dachpappen völlig ungeeignet.

Die Verbindung mehrerer trockener Schichten, z. B. für Papierhandtücher oder für Wärmeisolationsmaterial, ist bekannt aus der GB-A-1 331 817 oder den US-Patentschriften 1 503 337 und 3 072 511, eignet sich aber nicht für Naßverfahren.

Bei der Herstellung mehrschichtiger flexibler Einlagebahnen hat die Anmelderin ferner eine Gewebebahn aus Polyester verwendet, auf deren beiden Seiten jeweils eine Vliesschicht aus Glasfasern aufgeklebt ist. Die Vliesschichten müssen bei diesem Produkt eine relativ große Faserlänge, z. B. in der Größenordnung von 10—25 mm, haben, damit sie in sich zusammenhalten, und sie sind deshalb wesentlich weniger dehnungsfähig als die mittlere Gewebebahn. Wird die sogenannte Dachpappe (hierunter wird, wie auch im folgenden, eine bituminöse Dichtungsbahn verstanden) auf Zug beansprucht, so dehnt sich die mittlere Gewebebahn elastisch, während die Vliesschichten schon bei geringer Dehnungsbeanspruchung, typisch 2%, reißen. Dies kann Risse in der Dachpappe zur Folge haben und ist ungünstig, denn es erhöht das Risiko, daß mit der Zeit undichte Stellen im Dachbelag entstehen.

Aus der US-A-2 881 072 kennt man eine Maschine zur Herstellung von kräftigem Papier, z. B. für Papiersäcke. Dieses Papier hat eine Verstärkungseinlage aus längeren Fasern, die z. B. Glasfasern mit einer Länge von 12—37 mm (0,5—1,5 Zoll) sein können. Die äußeren Schichten des Papiers bestehen in üblicher Weise aus Papierpulpe, also aus Zellulosefasern, d. h. es handelt sich um ein laminiertes Produkt, dessen Schichten klar getrennt sind und das zudem eine geschlossene Struktur (zur Verwendung bei Säkken) aufweist, so daß es sich in keiner Weise als Einlagebahn für sogenannte Dachpappen eignet.

Aus der DE-C-483 735 kennt man ein Produkt zum Decken von Dächern, zum Isolieren von feuchten Wänden, oder für Verpackungsstoffe. Dieses Produkt soll Belastungen standhalten, ohne zu reißen. Als Ausgangsmaterial dienen 2 Lagen Filz, Papiere oder Pappen. Dazwischen liegt eine Schicht aus Gewebe, Geflecht oder dergleichen. Diese Schichten werden mit einem tierischen oder pflanzlichen Leim oder mit Wasserglas miteinander verbunden. Nach dem Trocknen wird dieses Produkt dann mit einem wasserdicht machenden Material überzogen, z. B. mit Asphalt, oder mit einer Mischung aus Pech, Teer, Harz, Öl und Fett. Man geht also hier von trockenen Einzelschichten aus, die man zusammenklebt, und erhält so ein laminiertes Produkt, dessen einzelne Schichten sich bei Belastung auf Zug unterschiedlich dehnen. Zum Beispiel wird sich bei Zugbelastung die mittlere Gewebebahn elastisch dehnen, während die äußeren Papier- oder Pappeschichten schon bei geringer Dehnungsbeanspruchung reißen. Bei Verwendung als Dachpappe kann dies Risse im Dach zur Folge haben, d. h. das Risiko ist auch hier groß, daß mit der Zeit undichte Stellen im Dachbelag entstehen.

Analoges gilt auch für das verstärkte Asbestpapier, das aus der US-A-2 401 314 bekanntgeworden ist. Dieses Asbestpapier enthält eine Verstärkungsbahn aus einem Baumwollgewebe und dient zur Isolierung von Rohrleitungen oder dergleichen gegen Flammeneinwirkung. Die äußeren Asbestschichten sollen das Baumwollgewebe bei Feuer vor rascher Verkohlung schützen. Als Einlagebahn für Dachpappen ist dieses Spezialprodukt völlig ungeeignet, zumal auch hier bei Zugbelastung das Baumwollgewebe elastisch nachgeben würde, während die Asbestschichten schon bei geringer Dehnung reißen würden.

Aus der FR-A-2 348 308 kennt man ein Asphaltprodukt, das mit Fasern verstärkt ist. Die Imprägnierung mit Asphalt kann auf trockenen oder feuchten Fasern erfolgen. Im letzteren Fall wird ein Mittel zugesetzt, das wasserabstoßend wirkt, so daß die Fasern trocken werden und der Asphalt guten Kontakt erhält. Es handelt sich hier also um ein Dachmaterial aus Asphalt mit Faserverstärkung, und nicht um eine Einlagebahn.

Dies gilt auch für das Produkt nach der GB-A-1 041 796. Hier sind zwei Schichten durch Asphalt miteinander verklebt, nämlich eine nicht gewebte Glasfaserschicht und eine gewebte Glasfaserschicht. Man erhält deshalb die bereits beschriebenen Nachteile solcher geschichteter Strukturen, insbesondere die Gefahr der Rißbildung bei Zugbeanspruchung.

Eine ebenfalls geschichtete Struktur aus Asphaltfilz mit einer Armierung aus einem Metallnetz zeigt die CH-A-178 451. Auch hier ergeben sich die bereits erläuterten Nachteile solcher geschichteter Strukturen.

Schließlich kennt man aus der NO-A-61 371 die Herstellung eines Spezialpapiers mit einem hohen Anteil an Glasfasern, z. B. zur Verwendung als Isolationsmaterial, in Papiersäcken, Papierschnüren, etc. Dabei wird eine übliche, noch flüssige Papierbahn aus Zellulosefasern, die auf einem Sieb in der üblichen Weise mittels Saugkästen entwässert wird, aus Düsen und mittels eines Luft- oder Dampfstrahles mit Glasfasern beschossen, so daß diese Fasern während des Verdickungsvorgangs in die Papierbahn eindringen und durch nachfolgendes Walzen mit der Papiermasse verpreßt werden. Bei einem solchen Verfahren kann man Glasfasern auch in Form von Glaspulver verwenden, da die Glaspartikel ja in das Papier selbst eingebettet und dort mechanisch festgehalten werden. Das Endprodukt ist jedoch geschlossen und eignet sich nicht als Einlagebahn für den angegebenen Zweck.

Es ist deshalb eine Aufgabe der Erfindung, ein Verfahren zur Herstellung einer Einlagebahn für sogenannte Dachpappen aufzuzeigen, mittels dessen eine Einlagebahn herstellbar ist, welche gute, gleichmäßige Dehnungseigenschaften bei Zugbelastung aufweist, eine preiswerte Herstellung ermöglicht, und welche gute Eigenschaften zur Verarbeitung in Dachbelägen, insbesondere eine entsprechende Oberfläche, aufweist. Außerdem ist es Aufgabe der Erfindung, eine Einlagebahn mit solchen Eigenschaften aufzuzeigen.

Diese Aufgabe wird für das Verfahren gelöst durch ein Vlieslege-Naßverfahren zur Herstellung einer Einlagebahn für sogenannte Dachpappen, mit folgenden Verfahrensschritten:

a) Zunächst wird im Naßverfahren eine Vlies-Unterschicht aus einer Mischung von Wasser und kurzen Fasern gebildet;

b) diese Vlies-Unterschicht wird auf einen vorgegebenen Trockengehalt eingestellt;

c) anschließend wird eine Einlagebahn mit einer im Verhältnis zu den Fasern der Unterschicht langen Faserlänge auf die Vlies-Unterschicht appliziert;

d) dann wird im Naßverfahren aus einer Mischung von Wasser und kurzen Fasern eine Vlies-Oberschicht auf die Einlagebahn aufgebracht;

e) die drei Schichten werden durch ein Bindemittel miteinander verbunden.

Für die Einlagebahn wird die Aufgabe gelöst durch eine mehrschichtige flexible Einlagebahn für sogenannte Dachpappen, mit folgenden Merkmalen:
Die Einlagebahn hat eine mittlere Gewebebahn, vorzugsweise aus organischem Werkstoff, z. B. Polyester;
auf diese Einlagebahn ist beidseitig eine Vliesschicht aus im Verhältnis zur Faserlänge der mittleren Gewebebahn kurzen Glasfasern aufgebracht;
diese kurzen Glasfasern sind direkt mit den Elementen der mittleren Gewebebahn verfilzt und sind mindestens teilweise mit diesen Elementen durch Bindemittel verbunden.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt

Fig. 1 eine schematische Darstellung eines Ausführungsbeispiels des erfindungsgemäßen Verfahrens,

Fig. 2 ein schematisches Schnittbild durch eine erfindungsgemäße Einlagebahn, in vergrößertem Maßstab, und

Fig. 3 und 4 Schaubilder zur Erläuterung der Erfindung.

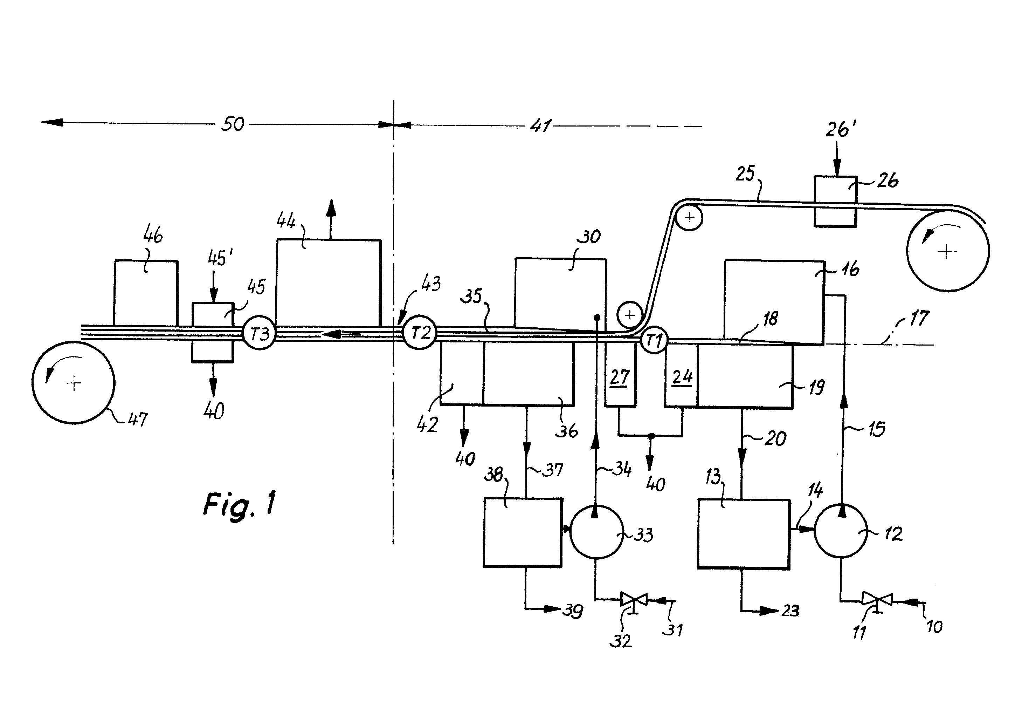

Fig. 1 zeigt den Verfahrensablauf bei einem erfindungsgemäßen Vlieslege-Naßverfahren.

Über eine Leitung 10 und ein sogenanntes Grammventil 11 wird einer Mischpumpe 12 Rohmasse zugeführt, z. B. eine Mischung aus dispergierten Glasfasern, Wasser und Brandschutzmittel, mit einem Glasfasergehalt von beispielsweise 0,5%. Aus einem Behälter 13 wird der Mischpumpe 12 Rückwasser über eine Leitung 14 zugeführt und mit der Rohmasse vermischt, und die Mischung mit einem Fasergehalt von mindestens 0,02% wird über eine Leitung 15 einem Stoffauflauf 16 zugeführt und dort in der üblichen Weise auf ein bei 17 angedeutetes, etwa 20° geneigtes, Schrägsieb im Hydroformverfahren aufgebracht, so daß sich dort eine Vlies-Unterschicht 18 bildet, die über eine erste Absaugvorrichtung 19 abgesaugt wird. Das abgesaugte Wasser wird über eine Leitung 20 dem Behälter 13 zugeführt und läuft also im geschlossenen Kreislauf um. Überschüssiges Wasser wird über eine Leitung 23 einem Rücklauf zugeführt. Das Schrägsieb 17 kann z. B. mit 50 m/min angetrieben werden.

Anschließend an die Absaugvorrichtung 19 wird die Vlies-Unterschicht 18 mittels Vakuum auf einen bestimmten Trockengehalt T1 eingestellt, der typisch 50 bis 60% beträgt. Hierzu dient eine Teiltrocknungsvorrichtung 24.

Auf die Vlies-Unterschicht 18 mit dem Trockengehalt T1 wird dann eine Einlagebahn 25 appliziert, welche in einer Station 26, vorzugsweise auf beiden Seiten, mit Bindemittel 26' versehen worden ist. Dieses Applizieren auf die Unterschicht 18 erfolgt mit Vakuumunterstützung durch eine Ansaugung 27, um eine innige Verbindung und Verfilzung der einzelnen Fasern der Vlies-Unterschicht 18 mit der Einlagebahn 25 und eine gute Verklebung der einzelnen Fasern mit deren Bindemittel zu bewirken.

Ein zweiter Stoffauflauf 30 wird in der gleichen Weise wie der erste Stoffauflauf 16 mit Rohmasse in Form von dispergierten Fasern versorgt, und zwar über eine Zufuhrleitung 31, ein Grammventil 32, eine Mischpumpe 33 und eine Zufuhrleitung 34, wobei auch hier in der Leitung 34 ein Fasergehalt von mindestens 0,02% vorhanden ist. Es entsteht so eine Vlies-Oberschicht 35, die mittels einer zweiten Absaugvorrichtung 36 abgesaugt wird, wobei das abgesaugte Wasser über eine Leitung 37 einem Behälter 38 für Rückwasser zugeführt und von dort wie dargestellt wieder der Mischpumpe 33 im geschlossenen Kreislauf zugeführt wird. Überschüssiges Wasser wird über eine Leitung 39 einem Rücklauf zugeführt.

Anschließend an den Absaugschritt erfolgt ein zweiter Teil-Trocknungsschritt, und hierzu wird die gesamte Bahn mittels Vakuum auf einen bestimmten Trockengehalt T2 eingestellt, der typisch 50 bis 60% beträgt. Hierzu dient eine zweite Teiltrocknungsvorrichtung 42, die ebenso wie die Vorrichtungen 27 und 24 an eine Vakuumquelle 40 angeschlossen ist.

Mit dem Trockengehalt T2 verläßt die gebildete Bahn 43 den mit 41 bezeichneten Naßbereich, wobei bereits hier die Vlies-Oberschicht 35 und die Vlies-Unterschicht 18 innig mit der Einlagebahn 25 verfilzt und verklammert sind, so daß sich ein mechanisch sehr stabiles Gebilde ergibt.

Im anschließenden Trockenbereich 50 erfolgt nun eine weitere Trocknung auf einer Wendesaugwalze 44 und auf einen Trockengehalt T3, der typisch 95% beträgt. Die weitgehend trockene Bahn 43 wird dann mit Vakuumunterstützung (Anschluß 40) in einer Nachleimvorrichtung 45 nachgeleimt, deren Leimzufuhr mit 45' bezeichnet ist. Anschließend wird sie in einer Vorrichtung 46 durch Wärme gehärtet, und dann bei 47 auf einem Haspel aufgerollt.

Die Vlies-Oberschicht 35 und die Vlies-Unterschicht 18 können typisch jeweils aus kurzen Fasern, z. B. bis 6 mm langen Polyester- oder Glasfasern, sowie brandhemmenden Zuschlagstoffen bestehen und ein Grammgewicht von je 25 bis 75 Gramm/m² haben. Die Einlegebahn 25 kann ein geeignetes Fadengelege sein, z. B. eine 0,6 mm starke Polyesterbahn. Auch eine Nonwoven-Bahn ist möglich, ebenso ein Glasseidengewebe.

Das Bindemittel für die Station 26 wird je nach den Eigenschaften der verwendeten Fasern gewählt. Für Glasfasern kann es z. B. ein Styren-Butadien-Latex (SB-Latex) sein, oder ein geeignetes Melaminharz.

Das Verfahrensprodukt zeichnet sich aus durch eine sehr gute Elastizität, da die Fasern der Unter- und der Oberschicht (18 bzw. 35) jeweils weniger untereinander verbunden sind als mit der Einlagebahn 25. Wenn die Einlagebahn 25 gedehnt wird, so entstehen nicht wie bei den bekannten mehrschichtigen Produkten Risse in der Ober- und/oder der Unterschicht, sondern diese Schichten dehnen sich mit der Einlagebahn 25 mit. Dies ermöglicht z. B. die Herstellung von bituminösen Dichtungsbahnen mit äußerst vorteilhaften Eigenschaften.

Ein besonderer Vorteil der Erfindung ist, daß sie es ermöglicht, für die Vlies-Unterschicht 18 und die Vlies-Oberschicht 35 äußerst kurze Fasern zu verwenden, einschließlich z. B. Glasfaserstaub, da die Verbindung mit der Einlagebahn 25 durch das erfindungsgemäße Verfahren außerordentlich gut und eng wird, so daß die Einlagebahn 25 der eigentliche Träger der mechanischen Festigkeit sein kann.

Für die Rohmasse, die über die Leitungen 10 und 31 zugeführt wird, kann man ein Glasfaser-Wasser-Gemisch mit Dispersionsmittel, in vielen Fällen auch ohne Dispersionsmittel, verwenden, wobei die üblichen brandhemmenden Zusätze ohne weiteres möglich sind.

Das Bindemittel 26' kann in der Station 26 wie dargestellt mittels eines Tauchbades, durch Aufsprühen, durch Schäumung, oder in sonstiger geeigneter Weise aufgebracht werden.

Je nach den gewünschten Eigenschaften des Endprodukts kann man für die Vliesschichten kurze Fasern (bis 6 mm) und für die Einlagebahn 25 eine Gewebeeinlage verwenden, oder man kann für die Vliesschichten 18, 35 lange Fasern verwenden (z. B. bis zu 25 mm Länge) und für die Einlagebahn 25 eine Fadeneinlage.

Die spezifischen Gewichte können z. B. betragen:

Einlagebahn 25: 60 bis 70 Gramm/m²
Unterschicht 18, Oberschicht 35:
    jeweils 25 bis 75 Gramm/m².

Bei der Beschreibung der nachfolgenden Figuren werden für gleiche oder gleichwirkende Teile jeweils dieselben Bezugszeichen verwendet wie bei Fig. 1.

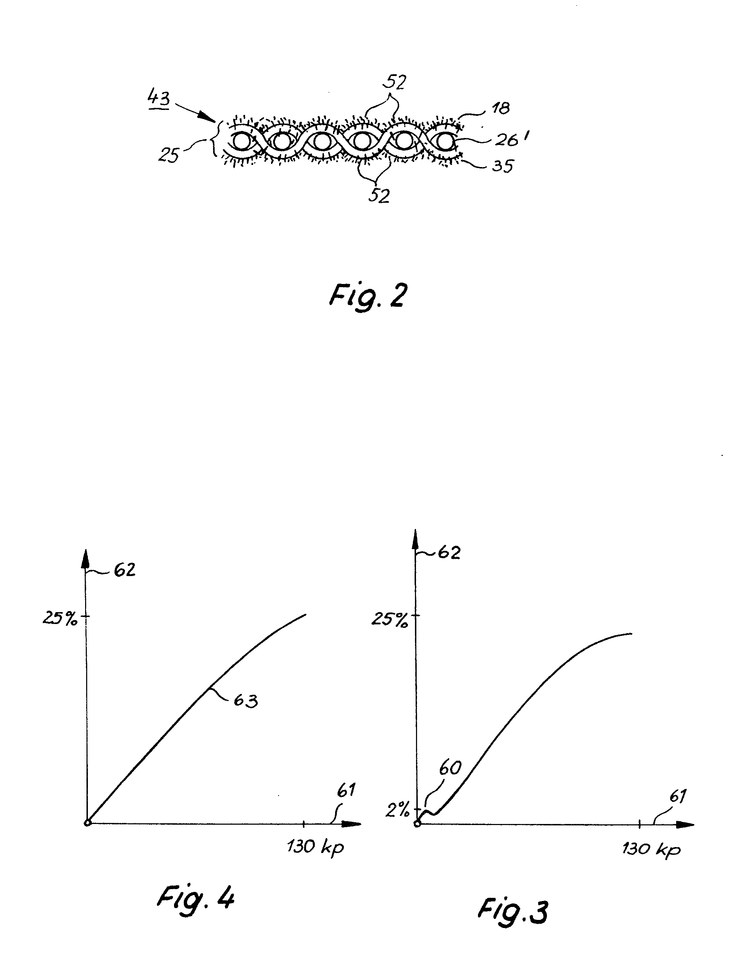

Fig. 2 zeigt schematisch und in stark vergrößertem Maßstab einen Schnitt durch eine nach Fig. 1 hergestellte Einlagebahn 43. Diese enthält eine mittlere Gewebebahn 25, z. B. eine Polyesterbahn, deren Stärke etwa zwischen 0,4 und 0,8 mm und bevorzugt bei etwa 0,6 mm liegt. Eine solche Gewebebahn ist sehr elastisch und kann stark gedehnt werden, ohne zu reißen. Ihr spezifisches Gewicht kann 60 bis 70 g/m² betragen.

Die Gewebebahn 25 ist auf beiden Seiten imprägniert mit dem Bindemittel 26', das auf den einzelnen Fasern abgeschieden ist. Mit Vorteil ist dies ein auf die Fasern der Deckschichten abgestimmtes Bindemittel, z. B. Styren-Butadien-Latex, oder ein Melaminharz.

Auf beiden Seiten der Gewebebahn 25 befindet sich ferner eine Nonwoven-Schicht 18 bzw. 35 aus kurzen und vorzugsweise sehr kurzen Fasern 52, z. B. Glasfasern der Größenordnung bis 6 mm, also vom Staub aufwärts. Wichtig ist dabei, daß die einzelnen Fasern 52 der Schichten 18, 35 direkt mit den Elementen der Gewebebahn 25 verfilzt und durch das Bindemittel 26' mit diesen Elementen verbunden sind. Die Schichten 18, 35 können z. B. jeweils ein Grammgewicht zwischen 25 und 75 g/m² haben.

Statt Glasfasern können für die Fasern 52 der Nonwoven-Schichten 18 und 35 z. B. auch Polyesterfasern verwendet werden. Auch hier können — genauso wie bei Glasfasern — Fasern 52 bis herab zu einer Kürze verwendet werden, bei der eine selbsttragende Nonwoven-Bahn nicht möglich wäre, also bei Glasfasern alles vom Staub aufwärts.

Fig. 3 zeigt das Verhalten der eingangs erwähnten bekannten Einlagebahn. Die Abzissenachse 61 gibt den Zug in kp (1 kp = 9,81 N) an, die Ordinatenachse 62 die Dehnung in %. Dies gilt auch für Fig. 4. Bei einer Zugbeanspruchung an einem 5 cm breiten Muster ergibt sich das Verhalten nach Fig. 3, d. h. bei einer Dehnung von etwa 2% ergibt sich ein Umkehrpunkt 60, weil die relativ langen Glasfasern der beiden Deckschichten zu reißen beginnen. Wird der Zug weiter erhöht, so steigt auch die Dehnung wieder an, da nunmehr im wesentlichen die Gewebebahn beansprucht wird.

Fig. 4 zeigt im Vergleich hierzu die Kurve 63 für eine erfindungsgemäße Einlagebahn. Die Fasern 52 der Schichten 18 und 35 sind hier kurz und zudem hauptsächlich direkt mit den Elementen der mittleren Gewebebahn 25 verbunden, so daß bei Zug die Dehnung im wesentlichen proportional zum Zug erfolgt, weil die Fasern 52 der Schichten 18 und 35 nur wenig auf Zug beansprucht werden und deshalb auch nicht reißen.

Dadurch ergibt sich der wesentliche Vorteil, daß bei Wärmespannungen in einem Dach die Dachpappe überall gleichmäßig gedehnt wird und nicht an einzelnen Stellen Risse auftreten, welche zu Undichtigkeiten im Dach führen. Dies ermöglicht seinerseits den Aufbau eines Daches aus weniger Dachpappeschichten, was aus verschiedenen Gründen sehr vorteilhaft ist. Außerdem lassen sich die beiden Nonwoven-Schichten 18 und 35 aus sehr billigem Vormaterial herstellen, da an die Länge der Fasern 52 hier keinerlei Anforderungen gestellt werden.

**Patentansprüche**

1. Vlieslege-Naßverfahren zur Herstellung einer Einlagebahn für sogenannte Dachpappen, mit folgenden Verfahrensschritten:

a) Zunächst wird im Naßverfahren eine Vlies-Unterschicht (18) aus einer Mischung von Wasser und kurzen Fasern gebildet;

b) diese Vlies-Unterschicht (18) wird auf einen vorgegebenen Trockengehalt (T1) eingestellt;

c) anschließend wird eine Einlagebahn (25) mit einer im Verhältnis zu den Fasern der Unterschicht (18) langen Faserlänge auf die Vlies-Unterschicht (18) appliziert;

d) dann wird im Naßverfahren aus einer Mischung von Wasser und kurzen Fasern eine Vlies-Oberschicht (35) auf die Einlagebahn (25) aufgebracht;

e) die 3 Schichten (18, 25, 35) werden durch ein Bindemittel (26'; 45') miteinander verbunden.

2. Verfahren nach Anspruch 1, dadurch gekennzeichnet, daß die Einlagebahn (25) mit Vakuumunterstützung (27) auf die Vlies-Unterschicht (18) appliziert wird.

3. Verfahren nach Anspruch 1 oder 2, dadurch gekennzeichnet, daß beim Verfahrensschritt e) die Einlagebahn (25) vor dem Applizieren auf die Vlies-Unterschicht (18) beidseitig mit dem Bindemittel (26') versehen wird.

4. Verfahren nach einem der Ansprüche 1—3, dadurch gekennzeichnet, daß beim Verfahrensschritt e) das Bindemittel (45') den 3 miteinander verbundenen Schichten (18, 25, 35) zugeführt (45) wird.

5. Verfahren nach Anspruch 4, dadurch gekennzeichnet, daß das Bindemittel (45') beim Verfahrensschritt e) in einer an das Naßverfahren anschließenden Trockenstufe zugeführt wird.

6. Verfahren nach einem der Ansprüche 1—5, dadurch gekennzeichnet, daß die Einlagebahn (25) ein Polyestergewebe aufweist.

7. Verfahren nach einem der Ansprüche 1—5, dadurch gekennzeichnet, daß die Einlagebahn (25) eine nicht gewebte Bahn ist.

8. Verfahren nach einem der Ansprüche 1—7, dadurch gekennzeichnet, daß das Material für die Vlies-Ober- und -Unterschicht (18 bzw. 35) Glasfasern aufweist.

9. Verfahren nach Anspruch 8, dadurch gekennzeichnet, daß die Glasfaserlänge im Bereich bis 6 mm liegt.

10. Mehrschichtige flexible Einlagebahn für sogenannte Dachpappen, mit folgenden Merkmalen:
Die Einlagebahn hat eine mittlere Gewebebahn (25), vorzugsweise aus organischem Werkstoff, z. B. Polyester;
auf diese mittlere Gewebebahn (25) ist beidseitig eine Vliesschicht (18, 35) aus im Verhältnis zur Faserlänge der mittleren Gewebebahn kurzen Glasfasern (52) aufgebracht;
diese kurzen Glasfasern (52) sind direkt mit den Elementen (26) der mittleren Gewebebahn (25) verfilzt und sind mindestens teilweise mit diesen Elementen (26) durch Bindemittel (26') verbunden.

11. Einlagebahn nach Anspruch 10, dadurch gekennzeichnet, daß die Länge der Glasfasern (52) im Bereich bis 6 mm liegt.

12. Einlagebahn nach Anspruch 10 oder 11, dadurch gekennzeichnet, daß das Bindemittel (26') ein Latex und vorzugsweise ein Styren-Butadien-Latex, oder ein Melaminharz, ist.

13. Einlagebahn nach einem der Ansprüche 10—12, dadurch gekennzeichnet, daß die Glasfasern (52) der Vliesschichten (18, 35) eine solche Kürze aufweisen, daß sie eine nichtselbsttragende Vliesschicht bilden.

14. Einlagebahn nach einem der Ansprüche 10—13, gekennzeichnet durch eine Faserlänge der Glasfasern vom Staub aufwärts.

15. Einlagebahn nach einem der Ansprüche 10—14, gekennzeichnet durch brandhemmende Zusätze.

16. Einlagebahn nach einem der Ansprüche 10—15, dadurch gekennzeichnet, daß die mittlere Gewebebahn (25) ein Polyestergewebe mit einer Dicke von etwa 0,4 bis 0,8 mm und vorzugsweise 0,6 mm ist.

17. Einlagebahn nach einem der Ansprüche 10—16, dadurch gekennzeichnet, daß das Grammgewicht einer Vliesschicht (18 oder 35) etwa 25 bis 75 g/m² beträgt.

## Claims

1. Wet-lay felting process for manufacture of an insert web for so-called roofing felts having the following method steps:

(a) first, in a wet process, a felted sublayer (18) is formed from a mixture of water and short fibers;

(b) this felted sublayer (18) is adjusted to a predetermined dryness state (T1);

(c) thereafter, an insert web (25) is applied to the felted sublayer (18), and having fibers of a length long in relation to the fibers of the sublayer (18);

(d) then, in a wet process, a felted top layer (35) is applied on the insert web (25) from a mixture of water and short fibers;

(e) the three layers (18, 25, 35) are connected by a binder (26'; 45').

2. Method according to claim 1, characterized in that the insert layer (25) is applied to the felted sublayer (18) with assistance of vacuum (27).

3. Method according to claim 1 or 2, characterized in that in the method step (e) the insert web (25) is supplied with the binder material (26') on both sides before application on the felted sublayer (18).

4. Method according to one of the claims 1—3, characterized in that in the method step (e), the binder (45') is applied (45) to the three layers (18, 25, 35) connected together.

5. Method according to claim 4, characterized in that the binder (45') is applied in the method step (e) in a drying stage following the wet process.

6. Method according to one of the claims 1—5, characterized in that the insert web (25) comprises a polyester fabric.

7. Method according to one of the claims 1—5, characterized in that the insert web (25) is a nonwoven web.

8. Method according to one of the claims 1—7, characterized in that the material for the felted top layer and bottom layer (18, 35, respectively) includes glass fibers.

9. Method according to claim 8, characterized in that the glass fiber length is in the range of up to 6 mm.

10. Multi-layer flexible insert web for so-called roofing felts, having the following characteristics:

the insert web has a central web (25), preferably made of an organic material, for example polyester;

the central web (25) has applied at both sides a felted layer (18, 35) of glass fibers (52) which are short in relation to the fiber length of the central insert web;

these short glass fibers (52) are directly felted with the elements (26) of the central web (25) and are at least partially bound by a binder (26') with these elements (26).

11. Insert web according to claim 10, characterized in that the length of the glass fibers (52) is in the range up to 6 mm.

12. Insert web according to claim 10 or 11, characterized in that the binder (26') is a latex and preferably a styrene-butadiene-latex, or a melamine resin.

13. Insert web according to one of the claims 10—12, characterized in that the glass fibers (52) of the felted layers (18, 35) are of such short length that they form a non-self-supporting felted layer.

14. Insert web according to one of the claims 10—13, characterized in that the glass fibers have a fiber length of upwardly from dust.

15. Insert web according to one of the claims 10—14, characterized by flame-retardant additives.

16. Insert web according to one of the claims 10—15, characterized in that the central insert web (25) is a polyester woven fabric with a thickness of about 0.4 to 0.8 mm, and preferably 0.6 mm.

17. Insert web according to one of the claims 10—16, characterized in that the gram weight of a felted layer (18 or 35) is about 25 to 75 g/m².

## Revendications

1. Procédé de fabrication par voie humide d'une feuille flexible pour feutre d'étanchéité pour toiture, comportant les étapes suivantes:

a) D'abord, on forme par voie humide une couche inférieure non tissée (18) en partant d'un mélange d'eau et de fibres courtes;

b) on règle cette couche inférieure non tissée (18) à une teneur en matière sèche (T1) prédéterminée;

c) on applique ensuite sur la couche inférieure non tissée (18) une feuille intercalaire (25) présentant une grande longueur de fibres par rapport aux fibres de la couche inférieure (18);

d) puis, en partant d'un mélange d'eau et de fibres courtes, et par voie humide, on applique une couche supérieure non tissée (35) sur la feuille intercalaire (25);

e) on relie les trois couches (18, 25, 35) entre elles par un adhésif (26'; 45').

2. Procédé selon la revendication 1, caractérisé par le fait que l'on applique la feuille intercalaire (25) sur la couche inférieure non tissée (18) avec l'assistance du vide (27).

3. Procédé selon l'une des revendications 1 et 2, caractérisé par le fait que lors de l'étape e) du procédé, on munit de l'adhésif (26') les deux côtés de la feuille intercalaire (25), avant son application sur la couche inférieure non tissée (18).

4. Procédé selon l'une des revendications 1 à 3, caractérisé par le fait que lors de l'étape e) du procédé, on amène (45) l'adhésif (45') aux trois couches (18, 25, 35) reliées entre elles.

5. Procédé selon la revendication 4, caractérisé par le fait que lors de l'étape e) du procédé, on amène l'adhésif (45') à une phase de séchage faisant suite au procédé par voie humide.

6. Procédé selon l'une des revendications 1 à 5, caractérisé par le fait que la feuille intercalaire (25) comporte un tissu de polyester.

7. Procédé selon l'une des revendications 1 à 5, caractérisé par le fait que la feuille intercalaire (25) est une feuille non tissée.

8. Procédé selon l'une des revendications 1 à 7, caractérisé par le fait que la matière destinée aux couches supérieure et inféreure non tissées (18 et 35) comporte des fibres de verre.

9. Procédé selon la revendication 8, caractérisé par le fait que la longeur des fibres de verre se situe dans une gamme allant jusqu'à 6 mm.

10. Feuille intercalaire flexible multicouche pour feutre d'étanchéité pour toiture, présentant les caractéristiques suivantes:
la feuille intercalaire comporte une feuille médiane de tissu (25), de préférence en matière organique, et par exemple en polyester;
sur les deux côtés de cette feuille médiane (25) est appliquée une couche non tissée (18, 35) formée de fibres de verre (52) courtes par rapport à la longueur des fibres de la feuille médiane de tissu;
ces fibres de verre courtes (52) sont feutrées directement avec les éléments (26) de la feuille médiane de tissu (25) et elles sont au moins partiellement reliées à ces éléments (26) par de l'adhésif (26').

11. Feuille intercalaire selon la revendication 10, caractérisée par le fait que la longueur des fibres de verre (52) se situe dans une gamme allant jusqu'à 6 mm.

12. Feuille intercalaire selon l'une des revendications 10 et 11, caractérisée par le fait que l'adhésif (26') est un latex, et de préférence un latex de styrène et de butadiène, ou bien une résine du type mélamine.

13. Feuille intercalaire selon l'une des revendications 10 à 12, caractérisée par le fait que les fibres de verre (52) des couches non tissées (18, 35) sont suffisamment courtes pour qu'il ne soit pas possible de réaliser une couche non tissée auto-portante.

14. Feuille intercalaire selon l'une des revendications 10 à 13, caractérisée par le fait que les fibres de verre ont une longueur au moins égale à celle de la poussière de fibres de verre.

15. Feuille intercalaire selon l'une des revendications 10 à 14, caractérisée par le fait qu'elle renferme des additifs ignifuges.

16. Feuille intercalaire selon l'une des revendications 10 à 15, caractérisée par le fait que la feuille médiane de tissu (25) est un tissu de polyester ayant une épaisseur d'environ 0,4 à 0,8 mm, et de préférence de 0,6 mm.

17. Feuille intercalaire selon l'une des revendications 10 à 16, caractérisée par le fait que le poids d'une couche non tissée (18 ou 35) est d'environ 25 à 75 g/m².

Fig. 1

Fig. 2

Fig. 4

Fig. 3